# EUROPEAN PATENT APPLICATION

(11) **EP 4 708 721 A2**
(43) Date of publication of application: **11.03.2026**
(21) Application number: 25224803.4
(22) Date of filing: 09.05.2022
(51) Int. Cl.: H04B 7/155

(54) **A MOBILE TELECOMMUNICATION SIGNAL BOOSTER**

(62) Divisional of application: 22172373.7
(71) Applicant: Unitron NV, 8970 Poperinge (BE)
(72) Inventor: DALECKY, Roman, 53009 Pardubice (CZ); JARKOVSKY, Ladislav, 51750 Castolovice (CZ); VANBOSSEL, Gilles, 8800 Roeselare (BE); DEBUSSCHERE, Floris, 8972 Krombeke (BE); DEREU, Koen, 760458 Singapore (SG); DELEU, Stephen, 9080 Beervelde (BE)
(74) Representative: De Clercq & Partners

(57) **Abstract**

There is provided a mobile telecommunication signal booster (10) configured to selectively amplify a wireless mobile telecommunication signal. The mobile telecommunication signal booster (10) comprises a digital signal processing module (100) with at least one downlink digital signal processing submodule (131) configured to receive one or more digitized downlink signals from one or more of the downlink analog-to-digital converters (112) and digitally process the signal of at least three selected downlink carrier channels of the one or more digitized downlink signals. The frequency of the at least three selected downlink carrier channels received at one or more of the downlink analog-to-digital converters (112) is identical to the frequency of the corresponding downlink carrier channels received at the donor antenna (20).

## Description

### Technical Field

There is disclosed a mobile telecommunication signal booster, also known as a cell phone signal booster, cell phone amplifier or cellular repeater, etc. , which is a type of wireless signal amplifier used to improve cell phone reception of wireless mobile telecommunication signals. More particularly, such a mobile telecommunication signal booster typically transmits and/or receives wireless radio frequency signals, or wireless RF signals, to and/or from an area obstructed by for example a building, a mountain, etc..

### Background art

Such a mobile telecommunication signal booster typically comprises a donor antenna and a rebroadcast antenna and is configured to amplify a wireless mobile telecommunication signal received by the donor antenna before retransmission at the rebroadcast antenna. Such a mobile telecommunication signal booster is typically advantageous in situations where the signals from a wireless telecommunication network are in risk of being too weak for reliable reception by mobile user equipment, such as for example a cell phone. Such weak signals also affect the maximum attainable data rate negatively.

The wireless telecommunication signal received by the donor antenna for example originates from a nearby cell tower of a base station of a mobile telecommunication network. The donor antenna is typically installed in a location where reception of the wireless signals is better then at the location of a cell phone or any other suitable mobile user equipment. This is typically in a location closer to a mobile telecommunication network equipment, such as for example a base station, than the location to be serviced by the rebroadcast antenna. According to one example, where for example indoor reception of the wireless mobile telecommunication signal is weak, for example because of the impact of certain building construction materials, the building size, multipath interference in urban areas, ... the donor antenna of the booster may for example be placed outdoors, such as for example outdoor on the roof, wall, or any other suitable location outside of a building, while the rebroadcast antenna is arranged indoor in the building. It is clear that alternative embodiments are possible, in which for example the donor antenna is placed indoor, at a location in the building where the signal level of the wireless telecommunication signal is higher than at other other indoor locations. For example the donor antenna could be arranged indoor, near a window, at a location closest to or least shielded from the mobile telecommunication equipment, such as for example a cell tower, ... . However such wireless telecommunication signal boosters may also be advantageous in any other situation, where the signal level of the wireless telecommunication signal received at a mobile user equipment risks being too weak, such as for example in rural areas, hilly or mountainous areas, ... where the distance to the mobile telecommunication network equipment may be large and/or obstructed in such a way as to reduce the signal level received by the mobile user equipment thereby reducing the signal quality and/or the attainable data rate. It is clear that in such circumstances, the rebroadcast antenna may also be arranged outdoors. Such a rebroadcast antenna may for example be directed towards an area in need of an amplified wireless telecommunication signal, such as for example an area at or beyond an edge of the area covered by a base station of a wireless telecommunication network, a valley at the other side of a hill or mountain, ....

A mobile telecommunication signal booster, referred to as wide-band or signal boosters are configured to amplify all frequencies from cell phone carriers. However, this leads to a high risk of interference, and telecommunication regulations may prohibit or limit their practical use by for example limiting their system gain.

A mobile telecommunication signal booster, referred to as a carrier specific signal booster, is configured to selectively boost frequencies, or in other words channels, associated with a single mobile network operator. Approval and allowability of a higher system gain makes such signal boosters more advantageous. However, such a selective amplification of a wireless mobile telecommunication signal typically leads to a more complex system, requiring a higher number of more complex components, typically limiting practical implementations of such boosters to a single operator and an amplification of a limited number of selected channels of the wireless telecommunication signal. Further such signal boosters are limited to amplification of channels from a single operator.

A known mobile telecommunication signal booster, consisting of analog components, is for example known from US4849963. The problem with such analog systems is that, for each additional channel of which selective amplification is desired by the mobile telecommunication signal booster, there needs to be duplicated many analog components, leading to an increase in size, complexity, power consumption, ... of such a system. Additionally, many of these analog components do not provide for a high level of flexibility and are typically set and/or tuned for the selective amplification of one or more particular channels upon manufacturing, without the possibility to change the selected channels later on.

In order to increase flexibility, there were developed digital telecommunication signal boosters, such as for example known from EP1109332 or EP2930860. Such digital repeaters for transmitting and receiving wireless radio frequency signals include a down-converter for down-converting the relevant cellular frequency band of the wireless RF signal to an intermediate frequency signal or IF signal. Subsequently the analog-to-digital converter converts that IF signal into a digital signal, which is processed with a digital signal processor. The digital signal processor separates the digital signal into a number of different frequency channels, which are then processed individually by means of a corresponding number of digital channelizers, and recombined. This digital signal is then converted back into an analog signal for retransmission. Down-conversion of the wireless RF signal to an intermediate frequency signal in the analog domain is provided for increasing the signal to noise ratio of the signal before the signal is converted to a digital signal by means of an ADC. This is believed to be important, especially in the context of weak wireless telecommunication signals, such as those in need of amplification by a mobile telecommunication signal booster.

However, as wireless mobile telecommunication systems evolve, the number of different frequency bands increases, and many mobile user equipments, such as for example mobile phones, support multiple frequency bands, such as for example GSM frequency bands, UMTS frequency bands, LTE frequency bands, 5G NR frequency bands, DCMA frequency bands, etc. Multiple mobile network operators now typically operate, each on a plurality of different cellular frequency bands in a wireless telecommunications network. For example in Belgium, there are mobile network operators operating on for example the following uplink and/or downlink cellular frequency bands: GSM-900/1800 MHz EDGE; 900/2100 MHz UMTS, or DC-HSPA+; 800/1800/2600 MHz LTE, or LTE-A; 2100/3500 MHz 5G NR; .... In this way the wireless mobile telecommunication signal comprises a plurality of different cellular frequency bands, each of these cellular frequency bands typically comprising a plurality of uplink and/or downlink carrier channels typically operated by a plurality of mobile network operators. It is clear that, in the context of this application such cellular frequency bands thus refer to such frequency bands or ranges as typically regulated by suitable standards bodies, such as for example ITU, 3GPP, ETSI, ATIS, ..., and the related properties of such frequency bands, such as for example FDD or TDD duplex mode, uplink or downlink band, carrier channel properties, ....

There thus exists a need for an improved mobile telecommunication signal booster, with an increased flexibility and simplicity, to enable selective amplification of carrier channels in such wireless mobile telecommunication networks comprising an increasing number of different cellular frequency bands spread over a wireless mobile telecommunication frequency domain of which the bandwidth is increasing.

### Summary

According to a first aspect, there is provided a mobile telecommunication signal booster, and configured to selectively amplify a wireless mobile telecommunication signal received at a donor antenna for retransmission, wherein the mobile telecommunication signal booster is configured to extract from the wireless mobile telecommunication signal one or more downlink signals,
wherein the mobile telecommunication signal booster comprises a digital signal processing module, which comprises:
   - at least one downlink analog-to-digital converter, configured to receive and convert the one or more downlink signals to one or more digitized downlink signals; and
   - at least one downlink digital signal processing submodule configured to receive one or more digitized downlink signals from one or more of the downlink analog-to-digital converters and digitally process the signal of at least a predetermined number of selected downlink carrier channels of the one or more digitized downlink signals, and
wherein the mobile telecommunication signal booster is configured such that the frequency of the at least the predetermined number of selected downlink carrier channels received at one or more of the downlink analog-to-digital converters is identical to the frequency of the corresponding downlink carrier channels received at the donor antenna, and wherein the predetermined number is three.

In this way there is provided a mobile telecommunication signal booster with a more flexible and simple setup as the digital signal processing module processes the received wireless mobile telecommunication signal without the need for a prior downconversion by means of analog components. Surprisingly, it has been found that omission of the analog downconversion, prior to the digitisation of the wireless mobile telecommunication signal did not result in an unallowable decrease in the signal to noise ratio, even in the case of weak signals, as the omission of the analog components for downconversion in the signal path reduced the risk that such analog components contributed to an increase in the noise level in the analog signal. In this way a selective amplification of the wireless mobile telecommunication signal is realized in a simple and flexible way. The configuration of the selective amplification can also be more flexibly adapted to any specific or modifying needs by means of a reconfiguration of the operation of the digital signal processing module, which can typically be accomplished by means of a suitable software reconfiguration, and which does not require any adaption of the hardware components of the device. It is clear that this selective amplification of the wireless mobile telecommunication signal by the wireless telecommunication signal booster refers to the fact that the wireless telecommunication signal is not amplified in its entirety, but that a selected subset of carrier channels received are amplified by the wireless telecommunication signal booster. In this way the telecommunication signal booster can be more flexibly adapted to configurations of wireless telecommunication networks different in different regions, and additionally allows for a more simple configuration in which a plurality of carrier channels can be selectively amplified, for example in order to selectively amplify a plurality of carrier channels of a mobile network operator in different frequency bands, for example related to wireless telecommunication signals according to different technological implementations, such as for example according to different technological standards of telecommunication signals, such as for example such standards generally known to a man skilled in the art as GSM, UMTS, EDGE, LTE, 5G NR, .... According to a preferred embodiment provided a mobile telecommunication signal booster, and configured to selectively amplify a wireless mobile telecommunication signal received at a donor antenna for retransmission at a rebroadcast antenna, however according to alternative embodiments retransmission could also be provided by means of wired retransmission on a suitable wired medium. According to some embodiments the booster could comprise the donor antenna and the rebroadcast antenna, however, according to alternative embodiments, the booster could be suitably coupled to a booster antenna and/or a rebroadcast antenna, for example by means of a suitable connector and any suitable wired and/or wireless connection, and/or any suitable intermediary device.

According to an embodiment there is provided a mobile telecommunication signal booster, wherein the predetermined number is four.

As the number of downlink carrier channels increases, the advantages of the simplicity and flexibility increase.

According to an embodiment there is provided a mobile telecommunication signal booster, wherein the predetermined number of selected downlink carrier channels are selected from two or more different downlink cellular frequency bands of the wireless mobile telecommunication signal, preferably three or more different downlink cellular frequency bands, preferably four or more different downlink cellular frequency bands.

This is advantageous as typically the different carrier channels of a single mobile network operators spread across an increasing plurality of different cellular frequency bands. In prior art digital boosters, each cellular frequency band requires its own analog downconverter, thereby leading to a more complex and less flexible design. Further, as each cellular frequency band is processed separately in this way, the flexibility to freely select one or more carrier channels across a plurality of cellular frequency bands is limited, as each cellular frequency band typically leads to separate signals, which are separately digitized and processed.

According to an embodiment, there is provided a mobile telecommunication signal booster, wherein the downlink digital signal processing submodule is configured to digitally process the signal of the predetermined number of selected downlink carrier channels by means of one or more of the following:
- one or more digital filters for the signal;
- digital automated gain control of the signal;
- digital control of gain and/or attenuation of the signal;
- digital control of the signal level of the signal.

In this way the digital processing supports in realizing the selective amplification of the mobile telecommunication signal booster in a flexible and efficient way by enabling digital control of the signal level of the selected carrier channels.

According to an embodiment, there is provided a mobile telecommunication signal booster, wherein the digital signal processing module is configured to simultaneously process the signal of four or more selected digitized downlink carrier channels from four or more downlink signal cellular frequency bands, preferably wherein the digital signal processing module is configured to process and/or simultaneously process the signal of six or more selected digitized downlink carrier channels from four or more different downlink signal cellular frequency bands.

In this way the flexibility and efficiency is still further increased as, especially when the number of different carrier channels spread amongst different cellular frequency bands increases.

According to an embodiment, there is provided a mobile telecommunication signal booster, wherein the digital signal processing module is configured to extract and process a predetermined number of selected digitized downlink carrier channels with an aggregate bandwidth of 100MHz or more.

In this way, the efficiency and simplicity of the system allows for selective amplification of all carrier channels of at least one selected mobile network operator, even when these carrier channels are spread amongst a plurality of different cellular frequency bands of a mobile telecommunication signal.

According to an embodiment, there is provided a mobile telecommunication signal booster, wherein at least one downlink digital signal processing submodule is configured:
- to receive a digitized downlink signal comprising downlink carrier channels from a plurality of mobile network operators; and
- to only digitally process selected digitized downlink carrier channels of the digitized downlink signal from a selected subset of said mobile network operators.

In this way, selective amplification of carrier channels can be realized from for example one, two or more, but for example not all mobile network operators operating in a mobile telecommunications network. There the mobile telecommunication signal booster is able to reliably fulfil the requirements for carrier specific signal boosters, thereby reducing the risk for unwanted or unallowable interference, without being restricted to the carrier channels of a single mobile network operator.

According to an embodiment, there is provided a mobile telecommunication signal booster, wherein the digital signal processing module is configured to select the selected digitized downlink carrier channels from the respective digitized downlink signal which makes use of:
- Frequency division duplex; and/or
- Time division duplex.

According to an embodiment, there is provided a mobile telecommunication signal booster, wherein the digital signal processing module is configured to select:
- At least one selected digitized downlink carrier channel from a respective digitized downlink signal making use of Frequency division duplex; and
- At least one selected digitized downlink carrier channel from a respective digitized downlink signal making use of Time division duplex.

In this way the mobile telecommunication signal booster enables processing of mobile telecommunication signals with both frequency division duplex and time division duplex in an efficient and flexible way. This also prevents from the need for a plurality of separate devices in order to selectively boost the signals of a plurality of specific mobile network operators.

According to an embodiment, there is provided a mobile telecommunication signal booster, wherein the digital signal processing module further comprises a spectrum analyser configured:
- to detect and/or display the frequency spectrum of the at least one downlink signal; and/or
- to detect at least one selected downlink carrier channel of the respective downlink signal.

Such a spectrum analyser allows to visualize and/or adjust the power of the selected carrier channels in a flexible way.

According to a preferred embodiment, there is provided a mobile telecommunication signal booster, wherein a plurality of downlink digital signal processing submodules are arranged in a single-chip integrated circuit.

Such an embodiment further increases flexibility and reduces the risk for any generation of noise.

According to a preferred embodiment, there is provided a mobile telecommunication signal booster, which further comprises a downlink signal path circuit configured to:
- extract from the received wireless signal of the donor antenna one or more downlink signals;
- provide the one or more downlink signals to the at least one downlink inputs;
- provide the selected and digitally processed downlink carrier channels to the rebroadcast antenna for transmission.

According to a preferred embodiment, there is provided a mobile telecommunication signal booster, wherein the mobile telecommunication signal booster:
- is configured as a device arranged in a single housing; and/or
- does not comprise a plurality of devices arranged in separate housings and coupled by means of a wired or wireless interface.

This further simplifies the design of the device, minimizes the components thereof and reduces the risk of noise injection.

According to an embodiment, there is provided a mobile telecommunication signal booster that is configured to selectively amplify a wireless mobile telecommunication signal received at a rebroadcast antenna for retransmission at a donor antenna and is configured to extract from the wireless mobile telecommunication signal one or more uplink signals,
wherein the mobile telecommunication signal booster comprises a digital signal processing module, which comprises:
   - at least one uplink analog-to-digital converter, configured to receive and convert the one or more uplink signals to one or more digitized uplink signals; and
   - at least one uplink digital signal processing submodule configured to receive one or more digitized uplink signals from one or more of the uplink analog-to-digital converters and digitally process the signal of at least a predetermined number of selected uplink carrier channels of the one or more digitized uplink signals, and
wherein the mobile telecommunication signal booster is configured such that the frequency of the at least the predetermined number of selected uplink carrier channels received at one or more of the uplink analog-to-digital converters is identical to the frequency of the corresponding uplink carrier channels received at the rebroadcast antenna, and wherein the predetermined number is three.

According to further embodiments, similar embodiments as disclosed above with respect to the downlink signal processing submodule are possible for the uplink digital signal processing submodule, and also any combinations of such embodiments of the one or more downlink signal processing submodules and one or more uplink digital signal processing submodules.

According to a preferred embodiment, there is provided a mobile telecommunication signal booster, wherein a plurality of downlink digital signal processing submodules and a plurality of uplink digital signal processing submodules are arranged in a single-chip integrated circuit.

According to a preferred embodiment, there is provided a mobile telecommunication signal booster, which further comprises an uplink signal path circuit configured to:
- extract from the received wireless signal of the rebroadcast antenna one or more uplink signals;
- provide the one or more uplink signals to the at least one uplink inputs;
- provide the selected and digitally processed uplink carrier channels to the donor antenna for transmission.

According to a second aspect, there is provided a method of operating a mobile telecommunication signal booster according to the first aspect for selectively amplifying a wireless mobile telecommunication signal exchanged between:
- at least one mobile telecommunication network equipment by means of a donor antenna configured to exchange wireless mobile communication signals with the at least one mobile telecommunication network equipment; and
- at least one mobile user equipment by means of a rebroadcast antenna configured to exchange wireless mobile communication signals with the at least one mobile user equipment,

the method comprising the steps of:
   - the mobile telecommunication signal booster extracting from the wireless mobile telecommunication signal one or more downlink signals,
   - the digital signal processing module of the mobile telecommunication signal booster:
      - receiving and converting the one or more downlink signals to one or more digitized downlink signals by said at least one downlink analog-to-digital converter; and
      - receiving the at least one digitized downlink signal from one or more of the downlink analog-to-digital converters and digitally processing the signal of at least said predetermined number of selected digitized downlink carrier channels of the one or more digitized downlink signals by said at least one downlink digital signal processing submodule, wherein the frequency of the at least said predetermined number of selected downlink carrier channels received at one or more of the downlink analog-to-digital converters is identical to the frequency of the corresponding downlink carrier channels received at the donor antenna; and
wherein the predetermined number is three.

According to an embodiment, there is provided a method, wherein the method comprises the steps of :
- the mobile telecommunication signal booster extracting from the wireless mobile telecommunication signal one or more uplink signals;
- the digital signal processing module of the mobile telecommunication signal booster:
   - receiving and converting the one or more uplink signals to one or more digitized uplink signals by said at least one uplink analog-to-digital converter; and
   - receiving at least one digitized uplink signal from one or more of the uplink analog-to-digital convertors and digitally processing the signal of at least said predetermined number of selected digitized uplink carrier channels of the one or more digitized uplink signals by said at least one uplink digital signal processor submodule,

wherein the frequency of the at least said predetermined number of selected uplink carrier channels received at one or more of the uplink analog-to-digital converter is identical to the frequency of the corresponding uplink carrier channels received at the rebroadcast antenna;
and wherein the predetermined number is three.

It is clear that further embodiments of the second aspect are possible with similar features of one or more of the embodiments described above with reference to the first aspect.

### Brief description of the drawings

Exemplary embodiments will now be described in further detail with reference to the following drawings:

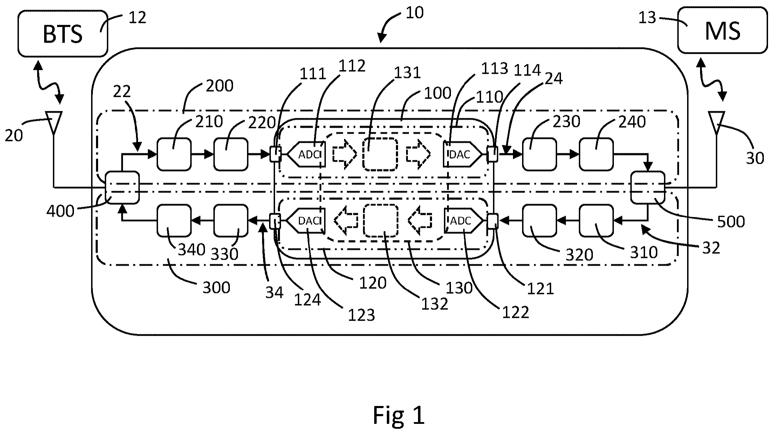

- Figure 1 schematically shows the components of an exemplary embodiment of a mobile telecommunication signal booster.

It is however clear that further alternative embodiments and/or combinations thereof are possible without departing from the scope defined by the claims.

### Detailed description

Figure 1 schematically shows an exemplary embodiment of a mobile telecommunication signal booster 10 comprising a donor antenna 20 and a rebroadcast antenna 30. Alternatively, the booster 10 could be coupled in any suitable way to a donor antenna 20 and a rebroadcast antenna 30, for example via a suitable connector. According to still further alternative embodiments, the booster 10 could for example be configured for retransmission of the wireless signal received at the donor antenna 20 on and/or via a suitable wired medium, instead of and/or in addition to the rebroadcast antenna 30. Preferably, the mobile telecommunication signal booster 10, which will also be referred to as the booster 10 is configured as a device in a single housing such as shown in the embodiment of Figure 1. However, it is clear that alternative embodiments are possible in which the booster 10 comprises a plurality of suitably coupled devices arranged in separate housings. However, according to the preferred embodiment shown, the booster does not comprise a plurality of devices arranged in separate housings and coupled by means of for example a wired or wireless interface. This reduces the complexity of the system and reduces the risk of injection of noise, especially to the weak signals which require amplification by the booster 10.

As schematically shown, and already mentioned above, the donor antenna 20, which is for example arranged outdoors on a building, or on the top of a mountain or a hill, is configured to exchange wireless telecommunication signals with for example a suitable base station 12 of a telecommunication network. In this way the donor antenna 20 is configured to receive a wireless downlink signal from the base station 12. Further the donor antenna 20 is also configured to transmit a wireless uplink signal to the base station 12. The donor antenna 20 could be coupled in any suitable way to the booster 10, such as for example by means of a direct connection or by means of a suitable wired connection such as for example by means of a suitable coaxial cable and/or corresponding connectors for coupling the outdoor antenna 20 to the booster 10.

As further shown, according to the embodiment of Figure 1, the booster 10 further comprises a rebroadcast antenna 30, which, such as already mentioned above, is arranged in an area in which the wireless telecommunication signal is obstructed in such a way that the signal level is reduced, for example by building materials, the presence of buildings, natural obstructions such as mountains or hills, .... According to the embodiment shown, the rebroadcast antenna 30 could for example be arranged at a suitable location inside a building. As shown the rebroadcast antenna 30 is configured to exchange wireless telecommunication signals with a mobile user equipment 13, such as for example a cell phone, or any other suitable device making use of a wireless mobile telecommunication network. In this way the donor antenna 20 is configured to receive a wireless downlink signal from the base station 12. The rebroadcast antenna 30 is configured to transmit a wireless downlink signal to the mobile user equipment 13 and receive a wireless uplink signal from the mobile user equipment 13. Also, the rebroadcast antenna 30 could be coupled in any suitable way to the booster 10, such as for example by means of a direct connection or by means of a suitable wired connection such as for example by means of a suitable coaxial cable and/or corresponding connectors for coupling the rebroadcast antenna 30 to the booster 10. It is clear that still further embodiments are possible in which the mobile telecommunication signal booster 10 is configured to selectively amplify a wireless mobile telecommunication signal received at a donor antenna 20 for transmission at a rebroadcast antenna 30, and/or vice-versa.

According to the embodiment shown in Figure 1, the booster 10 comprises a downlink signal path circuit 200. As will be explained in further detail below, this downlink signal path 200 is configured to extract from the received wireless signal of the outdoor donor antenna 20 one or more downlink signals 22. According to the embodiment shown, there is extracted a single downlink signal 22, however it is clear that according to alternative embodiments a plurality of downlink signals 22 can be extracted from the received wireless signal of the outdoor donor antenna 20. As shown, the downlink signal path 200 is configured to provide the downlink signal 22 a downlink input 11 of a digital signal processing module 100. However, it is clear that alternative embodiments are possible, in which the downlink signal path 200 provides one or more downlink signals to at least one downlink input 111 of the digital signal processing module 100. For example, two, three or more downlink signals 22 could be provided to two, three or more inputs of the digital signal processing module 100. As further schematically shown, and as will be described in further detail below, after suitable processing by the digital signal processing module 100, the downlink signal path 200 continues with providing selected and digitally processed downlink carrier channels 24 of the downlink signal 22 to the rebroadcast antenna 30 for wireless transmission to the mobile user equipment 13.

According to the embodiment shown in Figure 1, the booster 10 further comprises an uplink signal path circuit 300. As will be explained in further detail below, this uplink signal path 300 is configured to extract from the received wireless signal of the rebroadcast antenna 30 one or more uplink signals 32. According to the embodiment shown, there is extracted a single uplink signal 32, however, it is clear that according to alternative embodiments a plurality of uplink signals 32 can be extracted from the received wireless signal of the rebroadcast antenna 30. As shown, the uplink signal path 300 is configured to provide the uplink signal 22 an uplink input 121 of a digital signal processing module 100.

However, it is clear that alternative embodiments are possible, in which the uplink signal path 300 provides one or more uplink signals 32 to at least one uplink input 121 of the digital signal processing module 100. For example, two, three or more uplink signals 32 could be provided to two, three or more uplink inputs 121 of the digital signal processing module 100. As further schematically shown, and as will be described in further detail below, after suitable processing by the digital signal processing module 100, the uplink signal path 300 continues with providing selected and digitally processed uplink carrier channels 34 of the uplink signal 32 to the rebroadcast antenna 30 for wireless transmission to the mobile user equipment 13.

It is clear that the booster 10 is configured to selectively amplify the wireless mobile telecommunication signal, and thus not to amplify the wireless mobile telecommunication signal in its entirety with a single uniform amplification factor which would lead to the risk of undesired or unallowable interference with the parts of the wireless signals of the mobile telecommunication network which do not require any amplification.

According to the embodiment shown, the mobile telecommunication signal booster 10 is configured to extract from the wireless mobile telecommunication signal one or more downlink signals 22. According to the embodiment shown, there is extracted a single downlink signal, however it is clear that embodiments with a plurality of downlink signals are possible.

For example, in Belgium, wireless telecommunication signals of different mobile network operators are spread on plurality of different cellular frequency bands, such as for example:
- a downlink cellular frequency band of 791MHz to 821MHz and a corresponding uplink cellular frequency band of 832MHz to 862MHz;
- an uplink cellular frequency band of 882MHz to 915MHz and a corresponding uplink cellular frequency band of 926MHz to 960MHz;
- an uplink cellular frequency band of 1710MHz to 1785MHz, also referred to as B3_UL, and a corresponding downlink cellular frequency band of 1805MHz to 1880MHz, also referred to as B3_DL, together being part of the cellular frequency band referred to as B3 in the embodiment described below;
- an uplink cellular frequency band of 1920MHz to 1980MHz, also referred to as B1 UL, and a corresponding downlink cellular frequency band of 2110MHz to 2169MHz, also referred to as B1_DL, together being part of the cellular frequency band referred to as B1 in the embodiment described below;
- a frequency division duplex or FDD uplink cellular frequency band of 2500MHz to 2575MHz and a corresponding FDD downlink cellular frequency band of 2620MHz to 2690MHz;
- a time division duplex or TDD downlink and uplink cellular frequency band of 2510MHz to 2620MHz;
- a frequency division duplex or FDD uplink cellular frequency band of 3400MHz to 3500MHz and a corresponding FDD downlink cellular frequency band of 3500MHz to 3600MHz;
- a time division duplex downlink and uplink cellular frequency band of 3600MHz to 3800MHz. Some mobile network operators comprise one or more downlink and uplink carrier channels in a plurality of these frequency bands, such as for example one or more downlink and/or uplink carrier channels in two, three, four, five, six or more different frequency bands. It is clear that according to alternative embodiments, for example in different regions, there may be a different specific arrangement of cellular frequency bands and a different distribution of downlink carrier channels and/or uplink carrier channels of different mobile network operators. It is clear that, in order to selectively amplify the downlink and/or uplink carrier channels of at least one specific mobile network operator, the one or more downlink signals 22 and the one or more uplink signals 24 should comprise together all these downlink and/or uplink carrier channels spread amongst the different cellular frequency bands. It is clear that

According to some embodiments, there could be for example extracted a plurality of downlink signals 22 and a plurality of uplink signals 32 by the booster, for example each downlink signal 22 or uplink signal 32 grouping a plurality of frequency bands of with a neighbouring frequency range, or for separating downlink signals 22 or uplink signals 32 making use of FDD or TDD respectively.

According to the embodiment shown in Figure 1, the mobile telecommunication signal booster 32 comprises a donor antenna signal separator module 400 configured to couple the outdoor donor antenna 20 to the downlink signal path circuit 200 by extracting the downlink signal 22 from the wireless mobile telecommunication signal received by the donor antenna 20. The donor antenna signal separator module 400 is further configured to couple the uplink signal path circuit 300 to the donor antenna 20 by providing selected and digitally processed uplink carrier channels 34 for transmission as a wireless mobile telecommunication signal by the donor antenna 20. It is clear that alternative embodiments are possible in which the booster 10 is configured to extract from the wireless mobile telecommunication signal one or more downlink signals in any other suitable way.

According to an embodiment the optional donor antenna signal separator module 400 is configured to extract the downlink signal 22 by extracting a frequency range and/or timeslot that differs from the frequency range and/or timeslot of the selected and digitally processed uplink carrier channels 34. According to a particular embodiment the donor antenna signal separator module 400 may comprise or consist of one or more suitable frequency dividers and/or a suitably controlled switch.

According to the embodiment shown, the downlink signal path circuit 200, in the signal path between the digital signal processing module 100 and the donor antenna 20, optionally comprises a downlink input amplifier 220, preferably consisting of a low noise amplifier. Optionally, as shown, the downlink signal path circuit 200 also comprises a downlink input selector 210 coupled to the downlink input amplifier 220, preferably upstream of the downlink input amplifier 220, wherein the downlink input selector 210 is configured to select a selected frequency range and/or time slot comprising the frequency range and/or timeslot of the downlink carrier channels of the downlink signal 22. Preferably the downlink input selector 210 is further configured to select a selected frequency range and/or time slot not comprising the frequency range and/or timeslot of the selected and digitally processed uplink carrier channels 34. In this way the downlink carrier channels of the downlink signal 22 being provided to the digital signal processing module 100 are further isolated from the selected uplink carrier channels 34 before being amplified by the downlink input amplifier 220, which decreases the risk of any noise or distortion of the relevant portion of the downlink signal 22, which is typically weak and in need of amplification in the case where a booster 10 is applied. According to particular embodiments, where the downlink signal 22 comprises FDD downlink carrier channels, the downlink input selector 210 could for example comprise or consist of a suitable filter. According to particular embodiments, where the downlink signal 22 comprises TDD downlink carrier channels, the downlink input selector 210 could for example comprise or consist of a suitable switch of which the timing is controlled to isolate the time slots of the downlink carrier channels.

Similarly, as further shown, according to the embodiment of Figure 1, the booster 10 is also provided with an optional rebroadcast antenna signal separator module 500 configured to couple the rebroadcast antenna 30 to the uplink signal path circuit 300 by extracting the uplink signal from the wireless mobile telecommunication signal received by the rebroadcast antenna 30. The rebroadcast antenna signal separator module 500 is further configured to couple the downlink signal path circuit 200 to the rebroadcast antenna 30 by providing selected and digitally processed uplink carrier channels 24 for transmission as a wireless mobile telecommunication signal by the rebroadcast antenna 30. It is clear that alternative embodiments are possible, in which the booster 10 is configured to extract from the wireless mobile telecommunication signal one or more uplink signals in any other suitable way.

According to an embodiment the optional rebroadcast antenna signal separator module 500 is configured to extract the uplink signal 32 by extracting a frequency range and/or timeslot that differs from the frequency range and/or timeslot of the selected and digitally processed downlink carrier channels 24. According to a particular embodiment the rebroadcast antenna signal separator module 500 may comprise or consist of one or more suitable frequency dividers and/or one or more suitably controlled switches.

According to the embodiment shown, the uplink signal path circuit 300, in the signal path between the digital signal processing module 100 and the rebroadcast antenna 30, optionally comprises an uplink input amplifier 320, preferably comprising or consisting of a low noise amplifier. Optionally, as shown, the uplink signal path circuit 300 also comprises an uplink input selector 310 coupled to the uplink input amplifier 320, preferably upstream of the uplink input amplifier 320, wherein the uplink input selector 310 is configured to select a selected frequency range and/or time slot comprising the frequency range and/or timeslot of the uplink carrier channels of the uplink signal 32. Preferably the uplink input selector 310 is further configured to select a selected frequency range and/or time slot not comprising the frequency range and/or timeslot of the selected and digitally processed downlink carrier channels 24. In this way the uplink carrier channels of the uplink signal 32 being provided to the digital signal processing module 100 are further isolated from the selected downlink carrier channels 24 before being amplified by the uplink input amplifier 320, which decreases the risk of any noise or distortion of the relevant portion of the uplink signal 32, which is typically weak and in need of amplification in the case where a booster 10 is applied. According to particular embodiments, where the uplink signal 32 comprises FDD uplink carrier channels, the uplink input selector 310 could for example comprise or consist of a suitable filter. According to particular embodiments, where the uplink signal 32 comprises TDD downlink carrier channels, the uplink input selector 210 could for example comprise or consist of a suitable switch of which the timing is controlled to isolate the time slots of the uplink carrier channels.

According to the embodiment of Figure 1, as shown, the mobile telecommunication signal booster 10 comprises a digital signal processing module 100, which comprises two inputs, respectively coupled to two analog-to-digital converters 111, 121. It is clear that alternative embodiments are possible with any other suitable number of inputs coupled to any other suitable number of analog-to-digital converters, such as for example three, four, five, six or more.

According to the embodiments shown the digital signal processing module 100 comprises one downlink analog-to-digital converter or ADC 112, configured to receive and convert the downlink signal 22 to a digitized downlink signal. It is however clear that alternative embodiments are possible in which the digital signal processing module 100 comprises two or more downlink analog-to-digital converter 112, configured to receive and convert two or more downlink signals 22 to two or more digitized downlink signals. As further shown, the digital signal processing module 100 further comprises at least one downlink digital signal processing submodule 131 configured to receive the one or more digitized downlink signals from one or more of the downlink analog-to-digital converters 112 and digitally process the signal of at least a predetermined number of selected downlink carrier channels of the one or more digitized downlink signals. This predetermined number is preferably two, three, four or more. According to the embodiment shown, in this way it is for example possible to select the predetermined number of selected downlink carrier signals from two, three, four or more different downlink cellular frequency bands of the wireless mobile telecommunication signal, preferably three or more different downlink cellular frequency bands. Preferably, according to some embodiments, the booster is configured such that at least one of these ADCs is configured such that a single ADC receives a downlink signal comprising downlink carrier channels from two or more different downlink cellular frequency bands, for example from two or three different downlink cellular frequency bands. According to an example a first one of the ADCs 112 receives a downlink signal comprising the downlink cellular frequency bands of a first downlink cellular frequency band and a second downlink cellular frequency band. According to an example a second one of the ADCs 112 receives a downlink signal comprising the downlink cellular frequency bands of a third downlink cellular frequency band and a fourth downlink cellular frequency band. Preferably the first ADC not receiving the third and fourth downlink cellular frequency band and the second ADC not receiving the first and second downlink cellular frequency band. In this way the number of ADCs can be optimized. In this way, there is provided a flexible system in which the number of ADCs is limited as an ADC can receive a signal from two or more frequency bands, however, additionally, the dynamic range of the ADCs can be optimized as, groupwise, the frequency bands can still be distributed over a plurality of ADCs. Preferably this allows grouping of different frequency bands in such a way that the power differences inside such a group of frequency bands are lower than the power differences of frequency bands outside of the group.

According to an exemplary embodiment the donor antenna signal separator module 400 could for example be configured to generate a downlink signal 22 comprising the B3_DL downlink cellular frequency band and the B1_DL downlink cellular frequency band, for example by first filtering the B1 and B3 signal from the signal received from the donor antenna, and subsequently using a splitter to send this B1 and B3 signals respectively to the downlink input selector 210, where the B1 signal will be filtered by a suitable bandpass filter for the B1_DL downlink cellular frequency band, and the B3 signal will be filtered by a suitable bandpass filter for the B3_DL downlink cellular frequency band. According to such an embodiment the downlink input selector 210 will combine the filtered B1_DL and B3_DL signal and provide them to the downlink input amplifier 220 for feeding that signal to one ADC 112. It is clear that alternative embodiments are possible, in which a different number of downlink cellular frequency bands, such as three, four, etc. are provided to one ADC 112. It is further clear that still further examples are possible in which there are two or more downlink ADCs 112, each receiving two or more downlink cellular frequency bands of different cellular frequency bands, as mentioned above. As will be described below, according to a preferred embodiment, after digital processing by means of the digital signal processing module 100, the processed digital signals of two or more of these ADCs are output via one DAC of the digital signal processing module 100.

According to the embodiments shown the digital signal processing module 100 comprises one uplink analog-to-digital converter 122, configured to receive and convert the uplink signal 32 to a digitized uplink signal. It is however clear that alternative embodiments are possible in which the digital signal processing module 100 comprises two or more uplink analog-to-digital converter 122, configured to receive and convert two or more uplink signals 32 to two or more digitized uplink signals. As further shown, the digital signal processing module 100 further comprises at least one uplink digital signal processing submodule 132 configured to receive the one or more digitized uplink signals from one or more of the uplink analog-to-digital converters 122 and digitally process the signal of at least a predetermined number of selected uplink carrier channels of the one or more digitized uplink signals. This predetermined number is preferably two, three, four or more. According to the embodiment shown, in this way it is for example possible to select the predetermined number of selected uplink carrier signals from two, three, four or more different uplink cellular frequency bands of the wireless mobile telecommunication signal, preferably three or more different uplink cellular frequency bands. Preferably, according to some embodiments, the booster is configured such that at least one of these ADCs is configured such that one ADC receives an uplink signal comprising uplink carrier channels from two or more different uplink cellular frequency bands, for example from two or three different uplink cellular frequency bands. According to an example a first one of the ADCs 112 receives an uplink signal comprising the uplink cellular frequency bands of a first uplink cellular frequency band and a second uplink cellular frequency band. According to an example a second one of the ADCs 112 receives an uplink signal comprising the uplink cellular frequency bands of a third uplink cellular frequency band and a fourth uplink cellular frequency band. Preferably the first ADC not receiving the third and fourth uplink cellular frequency band and the second ADC not receiving the first and second uplink cellular frequency band. In this way the number of ADCs can be optimized. In this way, there is provided a flexible system in which the number of ADCs is limited as an ADC can receive a signal from two or more frequency bands, however, additionally, the dynamic range of the ADCs can be optimized as, groupwise, the frequency bands can still be distributed over a plurality of ADCs. Preferably this allows grouping of different frequency bands in such a way that the power differences inside such a group of frequency bands are lower than the power differences of frequency bands outside of the group.

According to an exemplary embodiment the rebroadcast antenna signal separator module 500 could for example be configured to generate an uplink signal 32 comprising the B3_UL uplink cellular frequency band and the B1_UL uplink cellular frequency band, for example by first filtering the B1 and B3 signal from the signal received from the donor antenna, and subsequently using a splitter to send this B1 and B3 signals respectively to the uplink input selector 310, where the B1 signal will be filtered by a suitable bandpass filter for the B1_UL uplink cellular frequency band, and the B3 signal will be filtered by a suitable bandpass filter for the B3_UL uplink cellular frequency band. According to such an embodiment the uplink input selector 210 will combine the filtered B1_UL and B3_UL signal and provide them to the uplink input amplifier 220 for feeding that signal to one ADC 122. It is clear that alternative embodiments are possible, in which a different number of uplink cellular frequency bands, such as three, four, etc. are provided to one ADC 122. It is further clear that still further examples are possible in which there are two or more uplink ADCs 122, each receiving two or more uplink cellular frequency bands of different cellular frequency bands, as mentioned above. As will be described below, according to a preferred embodiment, after digital processing by means of the digital signal processing module 100, the processed digital signals of two or more of these ADCs are output via one DAC of the digital signal processing module 100.

Preferably, similar to the embodiment shown in Figure 1, preferably there are arranged a plurality of downlink digital signal processing submodules 131 and/or uplink digital signal processing submodules 132 in a single-chip integrated circuit 130 of the digital signal processing module 100. Preferably the downlink digital signal processing submodules 131 and/or uplink digital signal processing submodules 132 could be implemented by means of similar or identical elements of the digital signal processing module 100. According to particular embodiments the downlink digital signal processing submodule 131 is configured to digitally process the signal of the predetermined number of selected downlink carrier channels by means of one or more of the following: one or more digital filters for the signal; digital automated gain control of the signal; digital control of gain and/or attenuation of the signal; digital control of the signal level of the signal. According to such embodiments, similarly the uplink digital signal processing submodule 132 is preferably also configured to digitally process the signal of the predetermined number of selected uplink carrier channels by means of one or more of the above-mentioned elements. It is clear that alternative embodiments are possible in which the single-chip integrated circuit 130 also comprises one or more analog components upstream of the ADC and/or downstream of the DAC, such as for example suitable amplifiers, filters, attenuators, etc. and according to such embodiments one or more of the analog components described above such as for example the downlink input amplifier 220, uplink input amplifier 320, etc. could be comprised in the single-chip integrated circuit 130.

It is clear from the above description that the mobile telecommunication signal booster 10 is preferably configured such that the frequency of the at least the predetermined number of selected downlink carrier channels 24 of the downlink signal 22 received at one or more of the downlink analog-to-digital converters 112 is identical to the frequency of the corresponding downlink carrier channels received at the outdoor donor antenna 20. In other words, the frequency of these downlink carrier channels of the downlink signal 22, which are subsequently selected and digitally processed by the digital signal processing module 100, is not altered between the donor antenna 20 and downlink analog-to-digital converter 112. As shown, according to this embodiment the elements in this part of the signal path, such as the donor antenna signal separator module 400, the downlink input selector 210, and the downlink input amplifier 220, are elements that do not alter the frequency, such as for example by means of downconversion or in any other way.

This results in a flexible and efficient design with a minimal number of components and operations on the downlink signal 22 before conversion to a digital signal, thereby reducing the risk for noise injection by such components in the analog signal path. This enables, according to preferred embodiments a digital signal processing module 100 that is configured to process, and preferably simultaneously process, the signal of four, five, six, or more selected digitized downlink carrier channels from four or more downlink signal cellular frequency bands. Such embodiments preferable enable the digital signal processing module 100 to extract and process a predetermined number of selected digitized downlink carrier channels with an aggregate bandwidth of 100MHz or more.

It is clear that similar preferred embodiments with respect to the selected uplink carrier channels of the uplink signal 32, such as for example shown in Figure 1, are possible. It is thus clear from the above description that the mobile telecommunication signal booster 10 is preferably configured such that the frequency of the at least the predetermined number of selected uplink carrier channels of the uplink signal 32 received at one or more of the uplink analog-to-digital converters 121 is identical to the frequency of the corresponding downlink carrier channels received at the rebroadcast antenna 30. In other words, the frequency of these uplink carrier channels of the uplink signal 32, which are subsequently selected and digitally processed by the digital signal processing module 100, is not altered between the rebroadcast antenna 30 and the downlink analog-to-digital converter 122. As shown, according to this embodiment the elements in this part of the signal path, such as the rebroadcast antenna signal separator module 500, the uplink input selector 310, and the uplink input amplifier 320, are elements that do not alter the frequency, such as for example by means of downconversion or in any other way. Similarly, this enables, according to preferred embodiments a digital signal processing module 100 that is configured to process, and preferably simultaneously process, the signal of four, five, six, or more selected digitized uplink carrier channels from four or more uplink signal cellular frequency bands. Such embodiments preferable enable the digital signal processing module 100 to extract and process a predetermined number of selected digitized uplink carrier channels with an aggregate bandwidth of 100MHz or more.

According to preferred embodiments, at least one of the downlink digital signal processing submodules 131 is configured to receive a digitized downlink signal 22 comprising downlink carrier channels from a plurality of mobile network operators. According to an embodiment at least one of the downlink digital signal processing submodules 131 is configured to receive a digitized downlink signal 22 comprising downlink carrier channels from a plurality of mobile network operators, but not all mobile network operators operating in a wireless mobile telecommunication network. According to such a preferred embodiment these downlink digital signal processing submodules 131 are configured to only digitally process selected digitized downlink carrier channels of the digitized downlink signal from a selected subset of said mobile network operators. According to such embodiments there could for example be selected a subset of two, three, four or more mobile network operators, of which at least one downlink carrier channel is selectively amplified by means of the booster 10.

Similarly, according to preferred embodiments, also, at least one of the uplink digital signal processing submodules 132 is configured to receive a digitized uplink signal 32 comprising uplink carrier channels from a plurality of mobile network operators, but preferably not all mobile network operators operating in a wireless mobile telecommunication network. According to such a preferred embodiment these uplink digital signal processing submodules 132 are configured to only digitally process selected digitized uplink carrier channels of the digitized uplink signal from a selected subset of said mobile network operators. According to such embodiments there could for example be selected a subset of two, three, four or more mobile network operators, of which at least one uplink carrier channel is selectively amplified by means of the booster 10. According to preferred embodiments the selected subset of mobile network operators of such downlink digital signal processing submodules 131 and uplink digital signal processing submodules 131 is identical.

According to some embodiments the downlink carrier channels of the downlink signals 22 and/or the uplink carrier channels of the uplink signals 32 are integrated into wireless telecommunication signal by means of frequency division duplex or FDD, in which the downlink carrier channels are separated from the uplink carrier channels by providing them at different frequency ranges during transmission. According to other embodiments the downlink carrier channels of the downlink signals 22 and/or the uplink carrier channels of the uplink signals 32 are integrated into wireless telecommunication signal by means of time division duplex or TDD, in which the downlink carrier channels are separated from the uplink carrier channels by providing them at different time periods during transmission. As already illustrated above by means of the example of the different cellular frequency bands in Belgium, according to some embodiments the wireless telecommunication signal simultaneously comprises a plurality of uplink and downlink signals which respectively make use of FDD and TDD. It is clear that, preferably, the digital signal processing module 100 is configured to select the selected digitized downlink carrier channels from the respective digitized downlink signal which makes use of Frequency division duplex and/or Time division duplex, for example by means of respectively suitable analog or digital filters configured to select the respective carrier channels in the frequency domain or for example by means of suitable analog or digital switching to select the respective carrier channels in the time domain.

According to a preferred embodiment, the digital signal processing module 100 is configured to select both digitized downlink and/or uplink carrier channels from a respective digitized downlink and/or uplink signal making use of Frequency division duplex; and digitized downlink and/or uplink carrier channels from a respective digitized downlink signal making use of Time division duplex. Preferably the booster is configured to provide downlink and/or uplink signals with TDD at a different input of the digital signal processing module than the downlink and/or uplink signals with FDD.

Optionally, the digital signal processing module 100 could further comprises a spectrum analyser configured to detect and/or display the frequency spectrum of the at least one downlink and/or uplink signal. In this way an operator could be guided to adapt the settings of the digital signal processing module in order to obtain the desired selective amplification. According to an alternative embodiment the output of the spectrum analyser could be used as an input for an automated system for determining and setting the optimal selective amplification of the booster of particular downlink and/or uplink carrier channels. According to still a further embodiment, the spectrum analyser could also enable the detection of at least one selected downlink or uplink carrier channel of the respective downlink or uplink signal, thereby supporting a manual or automatic selection of carrier channels for selective amplification by the booster 10.

According to a preferred embodiment, such as shown for example in the embodiment of Figure 1, preferably the downlink signal path circuit 200 further comprises an optional downlink output selector 230 and an optional downlink output power amplifier 240, and the uplink signal path circuit 300 further comprises an optional uplink output selector 330 and an optional uplink output power amplifier 340. According to such embodiments of the booster 10, the downlink signal path circuit 200, in the signal path between the digital signal processing module 100 and the rebroadcast antenna 30, comprises a downlink output amplifier 240, which preferably comprises or consists of a power amplifier. Optionally, there is also provided a downlink output selector 230 coupled to the downlink output amplifier 240, preferably upstream of the downlink output amplifier 240. This optional downlink output selector 230 is configured to select a selected frequency range and/or time slot comprising the frequency range and/or timeslot comprising the selected and digitally processed downlink carrier channels of the downlink signal 22, which as shown are output, after conversion to a suitable analog signal by means of a downlink digital-to-analog converter 113 at a suitable downlink output 114 of the digital signal processing module 100 for transmission by the rebroadcast antenna 30. Preferably this downlink output selector 230 is configured not to select the frequency range and/or timeslot of uplink carrier channels of the uplink signal 32 received at the rebroadcast antenna 30.

Similarly, according to such a preferred embodiment, such as shown for example in the embodiment of Figure 1, preferably also the uplink signal path circuit 300 further comprises an optional uplink output selector 330 and an optional downlink output power amplifier 340. According to such embodiments of the booster 10, the uplink signal path circuit 300, in the signal path between the digital signal processing module 100 and the donor antenna 20, comprises a downlink output amplifier 340, which preferably comprises or consists of a power amplifier. Optionally, there is also provided an uplink output selector 330 coupled to the uplink output amplifier 340, preferably upstream of the uplink output amplifier 340. This optional uplink output selector 330 is configured to select a selected frequency range and/or time slot comprising the frequency range and/or timeslot comprising the selected and digitally processed uplink carrier channels of the uplink signal 32, which as shown are output, after conversion to a suitable analog signal by means of an uplink digital-to-analog converter 123 at a suitable uplink output 124 of the digital signal processing module 100 for transmission by the donor antenna 20. Preferably this uplink output selector 230 is configured not to select the frequency range and/or timeslot of downlink carrier channels of the downlink signal 22 received at the donor antenna 20.

According to such preferred embodiments the downlink input selector 210 and the downlink output selector 230 comprise or consist of a suitable filter when the downlink signal 22 comprises downlink carrier channels which make use of FDD. According to such preferred embodiments the downlink input selector 210 and the downlink output selector 230 comprise or consist of a suitably controlled switch when the downlink signal 22 comprises downlink carrier channels which make use of TDD. According to such preferred embodiments the uplink input selector 310 and the uplink output selector 330 comprise or consist of a suitable filter when the uplink signal 32 comprises uplink carrier channels which make use of FDD. According to such preferred embodiments the uplink input selector 310 and the uplink output selector 330 comprise or consist of a suitably controlled switch when the uplink signal 22 comprises uplink carrier channels which make use of TDD.

According to an embodiment already referred to above, for example the downlink DAC 113 receives and outputs in analog form the digitally processed signals of two or more downlink ADCs 112. According to some examples described above in this way, the DAC could for example generate an analog signal comprising the digitally processed signal of a first and second downlink frequency band from a first downlink ADC 112 and the second and fourth frequency band of a second downlink ADC 112. According to a preferred embodiment the booster 10 further comprises a signal splitter configured to split the outputted signal of the downlink DAC 113 back into a number of signals equal to the number of respective ADCs 112 from which the DAC 113 received signals. According to this example, the signal output by the downlink DAC 113 could split in two signals, however it is clear that there are alternative embodiments possible in which the number of ADCs 112 associated with this DAC 113 was for example three, four or more, and in which the signal is split in three, four or more signals. According to such a preferred embodiment, this signal 24 is split in such a way that each signal is processed by means of a suitable downlink output selector 230 and a downlink output amplifier 240. According to the example described above, the signal of the downlink DAC 113 will thus be split and provided to a first signal path comprising a downlink output selector 230 and a downlink output amplifier 240, and a second signal path comprising a downlink output selector 230 and a downlink output amplifier 240. The downlink output selector 230 of the first signal path for example configured to select the first and second downlink carrier frequency band. The downlink output selector 230 of the second signal path for example configured to select the third and fourth downlink carrier frequency band. Both signal paths, by means of their power amplifier being coupled to the rebroadcast antenna signal separator module 500. In this way it is clear that, according to such an embodiment, one downlink ADC 112 is coupled to a single downlink input amplifier 210, and one downlink DAC 113 is coupled to a plurality of downlink output amplifiers 240.

Similarly, according to an embodiment already referred to above, for example the uplink DAC 123 receives and outputs in analog form the digitally processed signals of two or more uplink ADCs 122. According to some examples described above in this way, the DAC could for example generate an analog signal comprising the digitally processed signal of a first and second uplink frequency band from a first uplink ADC 122 and the second and fourth frequency band of a second uplink ADC 122. According to a preferred embodiment the booster 10 further comprises a signal splitter configured to split the outputted signal of the uplink DAC 123 back into a number of signals equal to the number of respective ADCs 122 from which the DAC 123 received signals. According to this example, the signal output by the uplink DAC 123 could split in two signals, however it is clear that there are alternative embodiments possible in which the number of ADCs 122 associated with this DAC 123 was for example three, four or more, and in which the signal is split in three, four or more signals. According to such a preferred embodiment, this signal 34 is split in such a way that each signal is processed by means of a suitable uplink output selector 330 and an uplink output amplifier 340. According to the example described above, the signal of the uplink DAC 123 will thus be split and provided to a first signal path comprising an uplink output selector 330 and an uplink output amplifier 340, and a second signal path comprising an uplink output selector 330 and an uplink output amplifier 340. The uplink output selector 230 of the first signal path for example configured to select the first and second uplink carrier frequency band. The uplink output selector 230 of the second signal path for example configured to select the third and fourth uplink carrier frequency band. Both signal paths, by means of their power amplifier 340 being coupled to the donor antenna signal separator module 400. In this way it is clear that, according to such an embodiment, one uplink ADC 122 is coupled to a single uplink input amplifier 310, and one uplink DAC 113 is coupled to a plurality of uplink output amplifiers 340.

In the following detailed description, the technology underlying the present disclosure will be described by means of different aspects thereof. It will be readily understood that the aspects of the present disclosure, as generally described herein, and illustrated in the figures, can be arranged, substituted, combined, and designed in a wide variety of different configurations, all of which are explicitly contemplated and make part of this disclosure.

This description is meant to aid the reader in understanding the technological concepts more easily, but it is not meant to limit the scope of the present disclosure, which is limited only by the claims.

Reference throughout this specification to "one embodiment" or "an embodiment" means that a particular feature, structure or characteristic described in connection with the embodiment is included in at least one embodiment of the present disclosure. Thus, appearances of the phrases "in one embodiment" or "in an embodiment" in various places throughout this specification are not necessarily all referring to the same embodiment.

As used herein, the terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" when referring to recited members, elements or method steps also include embodiments which "consist of" said recited members, elements or method steps. The singular forms "a", "an", and "the" include both singular and plural referents unless the context clearly dictates otherwise.

Objects described herein as being "connected" or "coupled" reflect a functional relationship between the described objects, that is, the terms indicate the described objects must be connected in a way to perform a designated function which may be a direct or indirect connection in an electrical or nonelectrical, i.e. physical, manner, as appropriate for the context in which the term is used.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, the term "about" is used to provide flexibility to a numerical value or range endpoint by providing that a given value may be "a little above" or "a little below" said value or endpoint, depending on the specific context. Unless otherwise stated, use of the term "about" in accordance with a specific number or numerical range should also be understood to provide support for such numerical terms or range without the term "about". For example, the recitation of "about 30" should be construed as not only providing support for values a little above and a little below 30, but also for the actual numerical value of 30 as well.

The recitation of numerical ranges by endpoints includes all numbers and fractions subsumed within the respective ranges, as well as the recited endpoints. Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the disclosure described herein are capable of operation in other sequences than described or illustrated herein.

Reference in this specification may be made to devices, structures, systems, or methods that provide "improved" performance, e.g. increased or decreased results, depending on the context. It is to be understood that unless otherwise stated, such "improvement" is a measure of a benefit obtained based on a comparison to devices, structures, systems or methods in the prior art. Furthermore, it is to be understood that the degree of improved performance may vary between disclosed embodiments and that no equality or consistency in the amount, degree, or realization of improved performance is to be assumed as universally applicable.

In addition, embodiments of the present disclosure may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic based aspects of the present disclosure may be implemented in software (e.g., instructions stored on non-transitory computer-readable medium) executable by one or more processing units, such as a microprocessor, a digital signal processor and/or application specific integrated circuits. As such, it should be noted that a plurality of hardware and software-based devices, as well as a plurality of different structural components may be utilized to implement the technology of the present disclosure. For example, "servers" and "computing devices" described in the specification can include one or more processing units, one or more computer-readable medium modules, one or more input/output interfaces, and various connections connecting the components.

Any of the methods disclosed could be performed as a computer-implemented method comprising the steps of the method; or alternatively a data processing apparatus, device or system comprising means for carrying out the steps of the method; or alternatively. a computer program product comprising instructions which, when the program is executed by a computer, cause the computer to carry out the steps of the method; or alternatively a computer-readable storage medium comprising instructions which, when executed by a computer, cause the computer to carry out the steps of the method.

## Claims

1. A mobile telecommunication signal booster (10) configured to selectively amplify a wireless mobile telecommunication signal received at a donor antenna (20) for transmission at a rebroadcast antenna (30),
wherein the mobile telecommunication signal booster (10) is configured to extract from the wireless mobile telecommunication signal one or more, preferably two or more, downlink signals,
wherein the mobile telecommunication signal booster (10) comprises a digital signal processing module (100), which comprises:
- at least one, preferable two or more, downlink analog-to-digital converter (112), configured to receive and convert the one or more, preferably two or more, downlink signals to one or more, preferably two or more, digitized downlink signals; and
- at least one downlink digital signal processing submodule (131) configured to receive one or more, preferably two or more, digitized downlink signals from one or more, preferably two or more, of the downlink analog-to-digital converters (112) and digitally process the signal of at least a predetermined number of selected digitized downlink carrier channels of the one or more, preferably two or more digitized downlink signals
wherein the digital signal processing module (100) is configured to select the selected digitized downlink carrier channels from the respective digitized downlink signal which makes use of frequency division duplex and time division duplex, and
wherein the mobile telecommunication signal booster (10) is configured such that the frequency of the at least the predetermined number of selected downlink carrier channels of the downlink signal received at one or more of the downlink analog-to-digital converters (112) is identical to the frequency of the corresponding downlink carrier channels received at the donor antenna (20),
and wherein the predetermined number is at least two, preferably wherein the predetermined number of selected digitized downlink carrier channels are selected from two or more different downlink cellular frequency bands of the wireless mobile telecommunication signal.

2. A mobile telecommunication signal booster according to claim 1, wherein the digital signal processing module (100) is configured to select:
- at least one selected digitized downlink carrier channel from a respective digitized downlink signal making use of Frequency division duplex; and
- at least one selected digitized downlink carrier channel from a respective digitized downlink signal making use of Time division duplex.

3. A mobile telecommunication signal booster (10) according to to claim 1 or 2, wherein the mobile telecommunication signal booster (10) is configured to provide downlink and/or uplink signals with TDD at a different input of the digital signal processing module (100) than the downlink and/or uplink signals with FDD.

4. A mobile telecommunication signal booster according to any of the preceding claims, wherein the digital signal processing module (100), comprises at least one downlink digital-to-analog converter (113) configured to output the processed digital signals of one or more, preferably two or more of said analog-to-digital convertors (112) via one digital-to-analog converter (113) of the digital signal processing module (100).

5. A mobile telecommunication signal booster according to any of the preceding claims, wherein:
- the predetermined number is at least three, preferably at least four; and/or
- the predetermined number of selected downlink carrier channels are selected from two or more different downlink cellular frequency bands of the wireless mobile telecommunication signal, preferably three or more different downlink cellular frequency bands, preferably four or more different downlink cellular frequency bands.

6. A mobile telecommunication signal booster according to any of the preceding claims, wherein the downlink digital signal processing submodule (131) is configured to digitally process the signal of the predetermined number of selected downlink carrier channels by means of one or more of the following:
- one or more digital filters for the signal;
- digital automated gain control of the signal;
- digital control of gain and/or attenuation of the signal;
- digital control of the signal level of the signal.

7. A mobile telecommunication signal booster according to any of the preceding claims, wherein the digital signal processing module (100) is configured to simultaneously process the signal of four or more selected digitized downlink carrier channels from four or more downlink signal cellular frequency bands, preferably wherein the digital signal processing module (100) is configured to process and/or simultaneously process the signal of six or more selected digitized downlink carrier channels from four or more different downlink signal cellular frequency bands.

8. A mobile telecommunication signal booster according to any of the preceding claims, wherein the digital signal processing module (100) is configured to extract and process a predetermined number of selected digitized downlink carrier channels with an aggregate bandwidth of 100MHz or more.

9. A mobile telecommunication signal booster according to any of the preceding claims, wherein:
- at least one downlink digital signal processing submodule (131) is configured:
- to receive a digitized downlink signal comprising downlink carrier channels from a plurality of mobile network operators; and
- to only digitally process selected digitized downlink carrier channels of the digitized downlink signal from a selected subset of said plurality of mobile network operators, preferably not all mobile network operators operating in a wireless mobile telecommunication network.

10. A mobile telecommunication signal booster according to any of the preceding claims, wherein the digital signal processing module (100) further comprises a spectrum analyser configured:
- to detect and/or display the frequency spectrum of the at least one downlink signal; and/or
- to detect at least one selected downlink carrier channel of the respective downlink signal.

11. A mobile telecommunication signal booster according to any of the preceding claims, wherein a plurality of downlink digital signal processing submodules (131) are arranged in a single-chip integrated circuit (130).

12. A mobile telecommunication signal booster according to any of the preceding claims, which further comprises:
- a downlink signal path circuit (200) configured to:
- extract from the received wireless signal of the donor antenna (20) one or more downlink signals;
- provide the one or more downlink signals to the at least one downlink inputs (111); and
- provide the selected and digitally processed downlink carrier channels to the rebroadcast antenna (30) for transmission.

13. A mobile telecommunication signal booster according to any of the preceding claims, wherein the mobile telecommunication signal booster:
- is configured as a device arranged in a single housing; and/or
- does not comprise a plurality of devices arranged in separate housings and coupled by means of a wired or wireless interface.

14. A mobile telecommunication signal booster (10) according to any of the preceding claims, wherein the mobile telecommunication signal booster (10) is configured to selectively amplify a wireless mobile telecommunication signal received at a rebroadcast antenna (30) for transmission at a donor antenna (30) and is configured to extract from the wireless mobile telecommunication signal one or more uplink signals,
wherein the mobile telecommunication signal booster (10) comprises a digital signal processing module (100), which comprises:
- at least one uplink analog-to-digital converter (122), configured to receive and convert the one or more uplink signals to one or more digitized uplink signals; and
- at least one uplink digital signal processing submodule (132) configured to receive one or more digitized uplink signals from one or more of the uplink analog-to-digital converters (112) and digitally process the signal of at least a predetermined number of selected uplink carrier channels of the one or more digitized uplink signals, and
wherein the mobile telecommunication signal booster (10) is configured such that the frequency of the at least the predetermined number of selected uplink carrier channels of the uplink signal received at one or more of the uplink analog-to-digital converters (122) is identical to the frequency of the corresponding uplink carrier channels received at the rebroadcast antenna (30), and wherein the predetermined number is at least two.

15. A method of operating a mobile telecommunication signal booster (10) according to any of the preceding claims for selectively amplifying a wireless mobile telecommunication signal exchanged between:
- at least one mobile telecommunication network equipment by means of a donor antenna (20) configured to exchange wireless mobile communication signals with the at least one mobile telecommunication network equipment; and
- at least one mobile user equipment by means of a rebroadcast antenna (30) configured to exchange wireless mobile communication signals with the at least one mobile user equipment,
the method comprising the steps of:
- the mobile telecommunication signal booster (10) extracting from the wireless mobile telecommunication signal one or more, preferably two or more, downlink signals,
- the digital signal processing module (100) of the mobile telecommunication signal booster (10):
- receiving and converting the one or more, preferably two or more, downlink signals to one or more, preferably two or more, digitized downlink signals by said at least one, preferably two or more, downlink analog-to-digital converter (112); and
- receiving the at least one, preferably two or more, digitized downlink signal from one or more, preferably two or more, of the downlink analog-to-digital converters (112) and digitally processing the signal of at least said predetermined number of selected digitized downlink carrier channels of the one or more, preferably two or more, digitized downlink signals by said at least one downlink digital signal processing submodule (131), and
wherein the digital signal processing module (100) selects the selected digitized downlink carrier channels from the digitized downlink signal making use of frequency division duplex and time division duplex; and
wherein the frequency of the at least said predetermined number of selected digitized downlink carrier channels of the downlink signal received at one or more, preferably two or more, of the downlink analog-to-digital converters (112) is identical to the frequency of the corresponding downlink carrier channels received at the donor antenna (20); and
wherein the predetermined number is at least two, preferably wherein the predetermined number of selected digitized downlink carrier channels are selected from two or more different downlink cellular frequency bands of the wireless mobile telecommunication signal;
preferably wherein the method comprises the steps of:
- the mobile telecommunication signal booster (10) extracting from the wireless mobile telecommunication signal one or more uplink signals;
- the digital signal processing module (100) of the mobile telecommunication signal booster (10):
- receiving and converting the one or more uplink signals to one or more digitized uplink signals by said at least one uplink analog-to-digital converter (122); and
- receiving at least one digitized uplink signal from one or more of the uplink analog-to-digital convertors (122) and digitally processing the signal of at least said predetermined number of selected digitized uplink carrier channels of the one or more digitized uplink signals by said at least one uplink digital signal processor submodule (132),
wherein the frequency of the at least said predetermined number of selected uplink carrier channels of the uplink signal received at one or more of the uplink analog-to-digital converter (112) is identical to the frequency of the corresponding uplink carrier channels received at the rebroadcast antenna (30);
and wherein the predetermined number is at least two.
